# EUROPEAN PATENT SPECIFICATION

(11) **EP 0 887 212 B1**
(45) Date of publication and mention of the grant of the patent: **24.09.2003**
(21) Application number: 98201950.7
(22) Date of filing: 11.06.1998
(51) Int. Cl.: B60G 3/06, B60G 9/02, B60G 21/05, B62D 7/00

(54) **Off-road vehicle front wheel suspension**
Vorderradaufhängung für ein geländegängiges Fahrzeug
Suspension de roue avant pour un véhicule tout-terrain

(30) Priority: 27.06.1997 IT BO970394
(43) Date of publication of application: 30.12.1998
(73) Proprietor: CNH Italia S.p.A., 41100 Modena (IT)
(72) Inventor: Masino, Chiaffredo, 41100 Modena (IT)
(74) Representative: Vandenbroucke, Alberic

(56) References cited:
- EP-A- 0 807 543
- WO-A-81/02411
- WO-A-90/11903
- DE-A- 3 601 619
- PATENT ABSTRACTS OF JAPAN vol. 016, no. 282 (M-1269), 23 June 1992 & JP 04 071914 A (NISSAN MOTOR CO LTD), 6 March 1992
- PATENT ABSTRACTS OF JAPAN vol. 095, no. 008, 29 September 1995 & JP 07 132718 A (KUBOTA CORP), 23 May 1995
- PATENT ABSTRACTS OF JAPAN vol. 011, no. 183 (M-598), 12 June 1987 & JP 62 012405 A (SUZUKI MOTOR CO LTD), 21 January 1987

## Description

The present invention relates to a front wheel suspension assembly for an off-road vehicle, which is particularly suitable for use over rough ground. More specifically, the present invention advantageously may be used on an agricultural tractor, to which the following description refers purely by way of example.

Wheeled agricultural tractors are known to be used for towing implements for mechanically working or chemically processing the soil. Conventionally, agricultural tractors are fitted at the front with a transverse, rigid axle defined axially by pivotable end portions supporting the steerable wheels. Normally, the axle is pivotably connected at its center to the frame for allowing transverse oscillation movements. Some recently designed front axles, as shown in EP-A-0.807.543, are partitioned and comprise on the one hand a central body, pivotably attached to the frame, and on the other hand laterally extending members supporting the pivotable end portions and the steerable wheels. The two laterally extending members are substantially identical, and are each connected to the central body through a respective articulated quadrilateral, in which the central body acts as the frame of the quadrilateral, and the end portion as the connecting rod. More specifically, the frame of each articulated quadrilateral and the respective connecting rod are connected to each other by a pair of rocker arms of different lengths, and by a shock absorber for limiting rotation of the rocker arms with respect to the frame. The articulated quadrilaterals therefore enable the respective steerable wheels to move independently, and provide for regulated rotation of the laterally extending members with respect to the central body. Each shock absorber meanwhile is operable to reduce the load transmitted by a respective steerable wheel to the frame of the tractor.

The above suspension assembly presents several drawbacks, mainly due to the complex design of the device connecting the laterally extending members to the central body. The large number of component parts of each articulated quadrilateral increases the likelihood of the steering assembly breaking down, and so reduces the reliability of the assembly in particularly heavy working conditions. Moreover, having to accommodate a large number of component parts in a confined space, such as between the steerable wheels of a tractor, results in a limitation of the size of the individual components, such as the rocker arms, which must therefore be made of materials of superior mechanical characteristics, thus increasing the purchase and running cost of the tractor.

In US-A-5.372.373, which is considered to represent the closest prior art, a vehicle wheel suspension is shown comprising individual wheel supporting arms which are connected centrally to the vehicle chassis for allowing up and down movement of the wheels. Wheel movement is cushioned by the provision of suspension springs inbetween the chassis and each wheel supporting arm. This arrangement has the disadvantage that the springs are provided in a vulnerable and unprotected location very close to the wheels. Also due to the specific dimensioning of the arrangement whereby the springs are provided at the distal ends of the wheel supporting arms, the springs have to allow for a considerable travel.

It is therefore an object of the present invention to provide a front axle suspension assembly for an off-road vehicle, designed to eliminate the aforementioned drawbacks.

According to the present invention, a front axle suspension assembly for a vehicle is provided comprising :
- a central axle member attached to the chassis of the vehicle;
- laterally extending support arms, each carrying an associated steerable wheel; each support arm being pivotally attached to the central axle member through a single pivot; and
- a shock-absorbing device operatively connected to each support arm and extending substantially vertically.

The assembly is characterized in that
- each support arm comprises a first anchorage point;
- the central axle member comprises laterally extending second anchorage points; said shock-absorbing device being disposed between a first and a second anchorage point; and
- each support arm has an upwardly-open U-shaped cross section to accommodate an associated second anchorage point.

A number of non-limiting embodiments of the present invention will now be described by way of example with reference to the accompanying drawings, in which:
Figures 1, 2, 5, 6 and 7 refer to steering assemblies not forming part of the present invention.
Figure 1 shows a schematic top plan view of a steering assembly not in accordance with the present invention;
Figure 2 shows a front view of a variation of the Figure 1 assembly;
Figure 3 shows a schematic front view of a steering assembly in accordance with the present invention;
Figure 4 shows a schematic top plan view of the Figure 3 assembly;
Figure 5 shows a schematic front view of a variation of the Figure 1 assembly;
Figure 6 shows a schematic front view of another variation of the Figure 1 assembly; and
Figure 7 shows a schematic front view of yet another variation of the Figure 1 assembly.

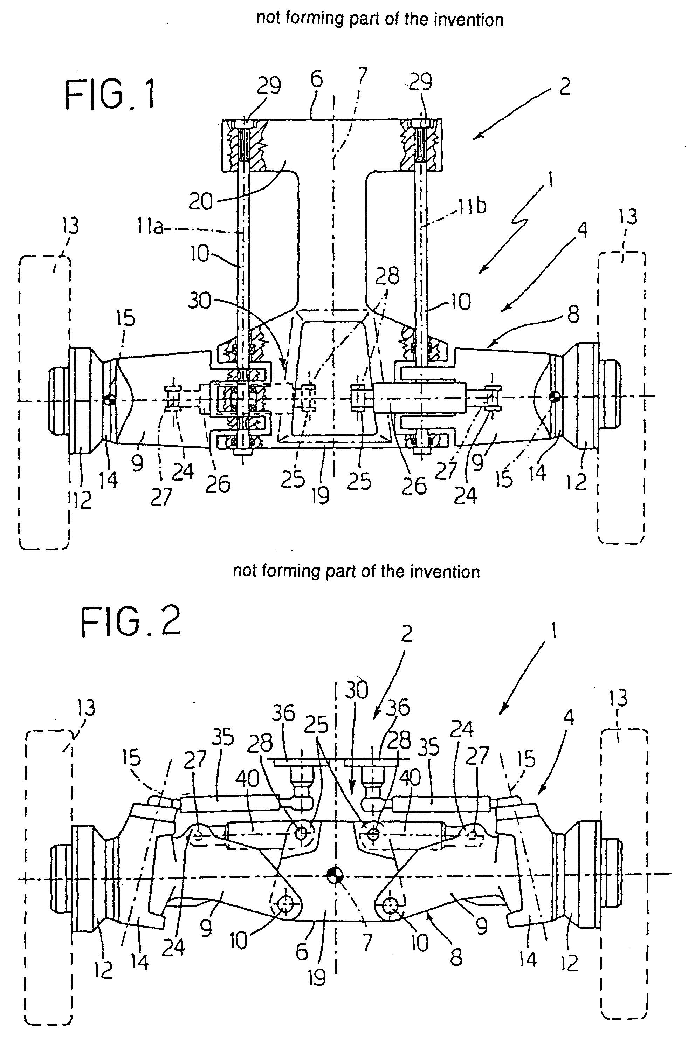

Reference number 1 in Figure 1 indicates as a whole a steering assembly connectable to an automotive vehicle, e.g. an agricultural tractor 2, of which the accompanying drawings show only a portion of the forecarriage comprising a T-shaped axle 4. Axle 4 is normally connected to the frame (not shown) of tractor 2 by a spherical joint, which will not be discussed here in any detail as it is described in EP-A-0.691.258, to which reference is made for the sake of brevity.

With reference to Figure 1, axle 4 comprises a central beam-shaped body 6 extending along a longitudinal axis 7 of axle 4 and defining the leg of the T of axle 4. Body 6 supports a transverse beam 8 defining the head of the T, the beam 8 comprising two arms 9 located on opposite sides of the longitudinal axis of tractor 2. The arms 9 are fitted to the body 6 by means of respective hinge shafts 10 so as to rotate freely about respective axes 11a and 11b substantially parallel to axis 7. It is remarked that each arm 9 is connected in angularly-fixed manner to a corresponding shaft 10 by a splined coupling, only one of which is shown in Figure 1. Each arm 9 is defined externally by a respective end portion 12, to which a steerable wheel 13 is connected via the interposition of a wheel hub 14. Each wheel hub 14 is hinged about an axis 15 inclined with respect to corresponding arm 9 by a vertical angle of approximately 90° or less. The axis 15 corresponds with the location of the so-called king pin (not shown), which is well known in the art.

The body 6 comprises a front portion 19, and terminates at the rear with an elongated portion 20 by which axle 4 is connected to the frame of tractor 2. It will be appreciated by a person skilled in the art that the axle 8 eventually may house a drive shaft (not shown) for transmitting torque to the steerable wheels 13 in order to drive the tractor 2 in case of a 4-wheel drive tractor.

On the side facing end portion 12, each arm 9 has an upper projection 24 for attaching a hinge pin 27 parallel to axes 11a, 11b. On the side facing each arm 9, front portion 19 has an upper projection 25 substantially identical to projection 24. Each arm 9 is connected to body 6 by a respective, horizontally disposed shock absorber 26 of the hydraulic type, which is connected to arm 9 at projection 24 by means of the pin 27, and to body 6 at projection 25 by means of a pin 28.

As further shown in Figure 1, each shaft 10 engages front portion 19, projects from the rear of the front portion 19, and extends through rear portion 20. More specifically, each shaft 10 terminates inside rear portion 20 with a splined portion delimited by a flanged portion 29, whereby the shaft 10 is fitted in axially-and angularly-fixed manner to the rear portion 20. In addition, the shaft 10 is fitted in angularly-free and axially-fixed manner to the front portion 19 of body 6 through the interposition of rotary bearings (shown but not referenced in Figure 1). As such, each arm 9, by being fitted to a corresponding shaft 10, is also axially fixed and angularly free with respect to body 6.

Each shaft 10 therefore acts as a deformable elastic member, or more simply, as a torsion bar, for a respective arm 9. More specifically, as a torsion bar, shaft 10 is operable to restore arm 9 to the rest position after each rotation about axis 11a, 11b caused by the tractor 2 traveling over rough ground. The combined operation of each shock-absorber 26 and associated shaft 10 define a shock-absorbing device 30, which, besides constantly restoring a respective wheel 13 to a substantially vertical rest position, also is operable to reduce the load transmitted by a steerable wheel 13 to the body of the tractor 2.

With reference to Figure 2, it should be added that assembly 1 further comprises a pair of rods 35, each connecting one of the end portions 12 to a boss 36 carried between the wheels 13 on the bottom side of the tractor frame and extending vertically downwardly therefrom. As clearly described in EP-A-0.691.258, the two rods 35, in combination with the intermediate frame, define a fixed distance between the two steerable wheels, as a result whereof the front axle 4 is pivoted as a whole relative to the tractor frame upon steering movements of the steerable wheels 13. This results in a so-called "compound steer" motion of the arrangement.

The assembly 1 of Figures 1 and 2 additionally comprises a pair of known linear actuators, which are not shown, each connected to one of the end portions 12 and centrally to the axle body 6, and which are operated in a push-pull manner to rotate the wheels 13 relative to the arms 9 for steering movements.

As already mentioned, the body 6 is connected to the frame of tractor 2 by a non-represented spherical joint, which is indicated by the reference number 5 in the aforementioned European patent application, so that body 6 is able to rotate freely with respect to axis 7 and with respect to a vertical axis through the center of the spherical joint 5. As explained, the rods 35 force the axle 4 to rotate about said vertical axis to enable tractor 2 to be maneuvered in very confined spaces.

Operation of the steering assembly 1 will be clearly understandable from the foregoing description with no further explanation required. In general, it will be noted that, in response to ground-induced loads on the tractor 2, more specifically on the front steerable wheels 13 thereof, oscillatory movements of the arms 9 of axle 4 about respective axes 11a, 11b are damped by the shock-absorbers 26, thus providing for smooth operation of tractor 2 over rough ground. The amplitude and period of oscillation of the arms 9 depend on the elastic characteristic of the shafts 10 and the damping capacity of the shock absorbers 26.

For example, although Figure 2 clearly may be a front view of the Figure 1 assembly, it also could show a simplified version of assembly 1 obtained by modifying the shock-absorbing device 30. In this simplified version, the shafts 10 are shortened to merely pins and are operable solely to connect the arms 9 to the front portion 19 of the axle 4. The elastic characteristic of the torsion bars is transferred from the shafts 10 to the shock absorbers 26, which are replaced by multifunctional shock-absorbing members 40 illustrated in Figure 2 in the same way as shock absorbers 26 for the sake of simplicity, but including elastic devices, such as springs, besides the hydraulic type dampers.

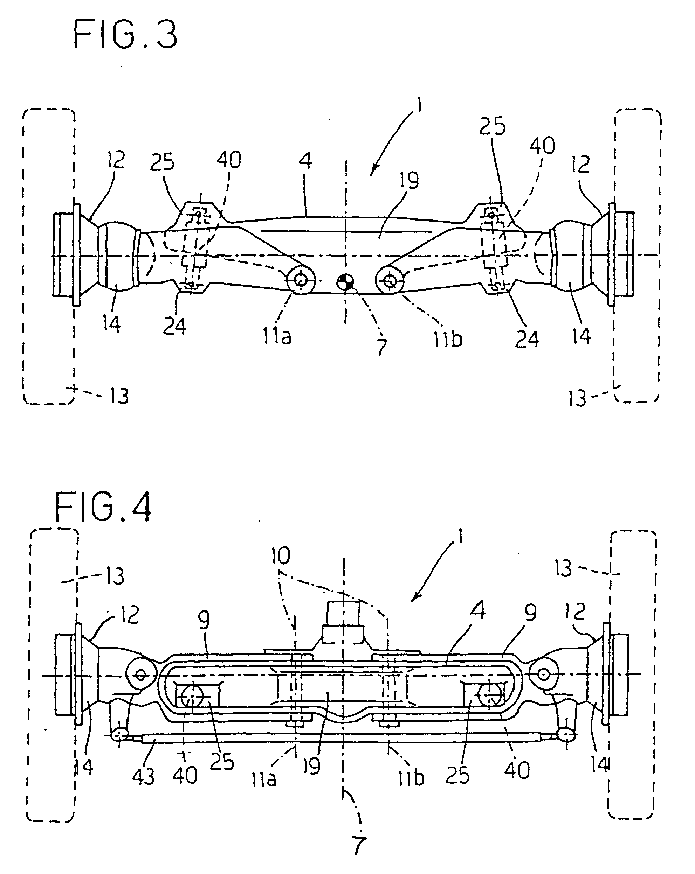

Assumed that the shock-absorbing device 30 comprises shock-absorbing members 40 of necessarily limited axial extension, shock-absorbing members 40 conveniently are positioned substantially vertically, as seen in Figures 3 and 4. For this purpose, front portion 19 is widened crosswise away from axis 7 to bring respective projections 25 outwardly. On the other hand, the arms 9 are modified to present projections 24, which face downwardly from the arms 9. To be able to receive the projections 25, the arms 9 have an upwardly-open U-shaped cross section. The shock-absorbing members 40 are positioned intermediate the respective projections 24 and 25 to cushion any movement between the arms 9 and the central front axle portion 19.

The end portions 12 are connected to each other by a connecting bar 43, which is positioned forwardly of the front portion 19. Assembly 1 also comprises a pair of known linear actuators (not shown), each connected centrally to the central portion 19 and to one of the end portions 12, and which are operated in a push-pull manner to rotate the wheels 13 with respect to the axle 4. It will be appreciated by a person skilled in the art that the arrangement of Figures 3 and 4, apart from the shock-absorbing means, differs substantially from the Figure 1 embodiment in that it does not represent a "compound steer" axle but a conventional axle which is attached to the tractor chassis for oscillatory movement around axis 7 alone.

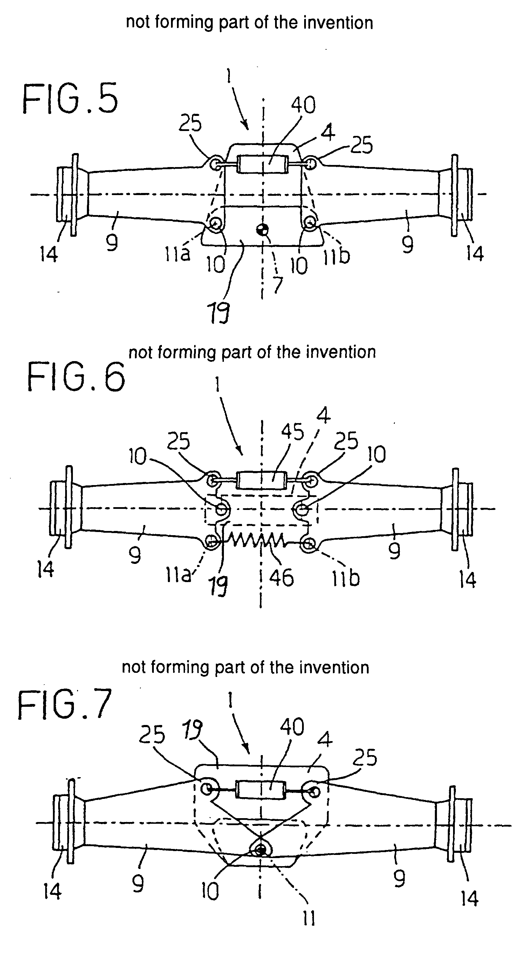

In a further simplified version of assembly 1, which is shown in Figure 5, shock-absorbing device 30 is defined by a single shock-absorbing member 40 positioned inbetween projections 25 of the arms 9. As such, the arms 9 are resiliently linked to each other through the intermediary of the member 40 instead of being cushioned directly to the central portion of the axle 4.

With reference to Figure 6, the assembly 1 of Figure 5 is modified by separating the energy storing function and the elastical response function provided by the shock-absorbing device 30. More specifically, the energy storing function is performed by a shock absorber 45 connecting the projections 25 of the arms 9, while the elastic characteristic is taken care of by a spring member 46 connecting the arms 9 together underneath the hinge pins 10, which are operable to connect the arms 9 to the central portion of axle 4. The positions of the shock absorber 45 and the spring member 46 may of course be inverted with no substantial alteration in the overall response of assembly 1 to ground-induced stresses or loads.

Figure 7 shows a further simplified version of the assembly 1 wherein, besides connecting the arms 9 by a single shock-absorbing member 40, the transverse dimension of the central part of axle 4 is also reduced by hinging both arms 9 to axle 4 at a single axis 11, which is a projection of the axes 11a and 11b in a central vertical plane of axle 4. Although not required, axis 7, around which the front axle 4 can oscillate, may coincide with axis 11, thereby further reducing the number of pivots of the axle 4.

All the above alternatives have various characteristics in common. More specifically, it will be observed that the shock-absorbing device 30 comprises a shock absorber 26 or a shock-absorbing member 40, connecting each arm 9 to a central portion of the axle 4 or to the oppositely positioned other arm 9. In Figure 1, two connecting members are provided between each arm 9 and the body 6 (shock absorber 26 and the torsion shaft 10), while only one connecting member is provided in Figures 2 to 5 and 7.

It further is observed that the only pivotal connection between a wheel hub 14 and an associated arm 9 is formed by the conventional king pin which is located on axis 15. This means that the wheels 13, upon experiencing a ground-induced load, are not moving in a completely vertical direction but in a circular manner around the pivot 11a, 11b connecting the arm 9 to the central portion of the axle 4. However, such an arrangement has no negative influence on the behaviour of the steerable wheels 13 in as much as the lever arm between a wheel 13 and a corresponding pivot 11a, 11b is rather long on the one hand and the working stroke of a shock absorber is small anyhow on the other hand. It will be clear however that by allowing this circular motion, the number of pivots on the front axle can be reduced, thereby reducing the number of parts and increasing the rigidity and the lifetime of the axle.

If required, both arms 9 may be made movable by the same angle and in the same direction by simply connecting shock absorbers 26 and 45 in fluidtight manner, so that axle 4 would react to external loads in substantially the same way as a single rigid axle.

In the Figure 5 to 7 embodiments, instead of having the oscillation axis 7, the central part of axle 4 may be rigidly connected to the frame of the tractor 2, in which case any jerking movements of the wheels 13 when traveling over rough ground are absorbed solely by the shock-absorbing members 40 (Figures 5 and 7) or by the combination of shock absorber 45 and spring 46 (Figure 6).

## Claims

1. A front axle suspension assembly (1) for a vehicle comprising :
- a central axle member (19) attached to the chassis of the vehicle;
- laterally extending support arms (9), each carrying an associated steerable wheel (13); each support arm (9) being pivotally attached to the central axle member (19) through a single pivot (10); and
- a shock-absorbing device (40) operatively connected to each support arm (9) and extending substantially vertically; and
**characterized in that**
- each support arm (9) comprises a first anchorage point (24);
- the central axle member (19) comprises laterally extending second anchorage points (25); said shock-absorbing device (40) being disposed between a first and a second anchorage point (24, 25); and
- each support arm (9) has an upwardly-open U-shaped cross section to accommodate an associated second anchorage point (25).

2. A front axle suspension assembly (1) according to claim 1, **characterized in that** the central axle member (19) is pivotably connected to the chassis of the vehicle through a single, horizontally disposed pivot (7), extending in the fore-and-aft direction of the vehicle.

3. A front axle suspension assembly (1) according to claims 1 or 2, **characterized in that** the shock-absorbing device (40) comprises elastic means (10, 46) and accumulating means (26, 45) cooperating with each other to regulate displacement of an associated steerable wheel (13) relative to the chassis of the vehicle.

4. A front axle suspension assembly (1) according to claim 3, **characterized in that** said elastic means and said accumulating means are incorporated in a single shock-absorbing member (40).

5. A front axle suspension assembly (1) according to any of the preceding claims, **characterized in that** the single pivots (10) connecting the support arms (9) to the central axle member (19) are coaxial with each other.

6. A front axle suspension assembly (1) according to any of the preceding claims, **characterized in that** said single pivot (10) is formed by a torsion bar elastically connecting each said support arm (9) to said central axle member (19).

7. A front axle suspension assembly (1) according to any of the preceding claims, **characterized in that** each steering wheel (13) is pivotally connected to a corresponding support arm (9) for pivotal movement around a substantially vertical axis (15) alone.

8. A front axle suspension assembly (1) according to claim 2 and any claim depending therefrom, **characterized in that** each second anchorage point (24) is located approximately in the middle between said pivot (7) and the steering wheel (13) associated with the arm (9) containing said anchorage point (24).

9. A front axle suspension assembly (1) according to any of the preceding claims, **characterized in that** each shock-absorbing device (40) is shielded from the environment by the combined covering action of the central axle member (19) and a support arm (9).

## Patentansprüche

1. Vorderachs-Aufhängungsbaugruppe (1) für ein Fahrzeug, mit:
- einem in der Mitte angeordneten Achsbauteil (19), das an dem Fahrgestell des Fahrzeuges befestigt ist;
- sich seitlich erstreckenden Tragarmen (9), die jeweils ein zugehöriges lenkbares Rad (13) tragen; wobei jeder Tragarm (9) schwenkbar an dem in der Mitte angeordneten Achsbauteil (19) über einen einzigen Schwenkpunkt (10) verbunden ist; und
eine Stoßdämpfervorrichtung (40), die betriebsmäßig mit jedem Tragarm (9) verbunden ist und sich im wesentlichen vertikal erstreckt,
**dadurch gekennzeichnet, daß**:
- jeder Tragarm (9) einen ersten Verankerungspunkt (24) aufweist;
- das in der Mitte angeordnete Achsbauteil (19) sich seitlich erstreckende zweite Verankerungspunkte (25) aufweist, wobei die Stoßdämpfervorrichtung (40) zwischen einem ersten und einem zweiten Verankerungspunkt (24, 25) angeordnet ist; und
- jeder Tragarm (9) einen nach oben offenen U-förmigen Querschnitt aufweist, um einen zugehörigen zweiten Verankerungspunkt (25) aufzunehmen.

2. Vorderachs-Aufhängungsbaugruppe (1) nach Anspruch 1, **dadurch gekennzeichnet, daß** das in der Mitte angeordnete Achsbauteil (19) schwenkbar mit dem Fahrgestell des Fahrzeuges über einen einzigen horizontal angeordneten Schwenkpunkt (7) verbunden ist, der sich in der Längsrichtung des Fahrzeuges erstreckt.

3. Vorderachs-Aufhängungsbaugruppe (1) nach Anspruch 1 oder 2, **dadurch gekennzeichnet, daß** die Stoßdämpfervorrichtung (40) elastische Einrichtungen (10, 46) und Akkumulatoreinrichtungen (26, 45) umfaßt, die miteinander zusammenwirken, um die Bewegung eines zugehörigen lenkbaren Rades (13) gegenüber dem Fahrgestell des Fahrzeuges zu regeln.

4. Vorderachs-Aufhängungsbaugruppe (1) nach Anspruch 3, **dadurch gekennzeichnet, daß** die elastischen Einrichtungen und die Akkumulatoreinrichtungen in einem einzigen Stoßdämpferbauteil (40) enthalten sind.

5. Vorderachs-Aufhängungsbaugruppe (1) nach einem der vorhergehenden Ansprüche, **dadurch gekennzeichnet, daß** die einzelnen Schwenkpunkte (10), die die Tragarme (9) mit dem in der Mitte angeordneten Achsbauteil (19) verbinden, koaxial zueinander sind.

6. Vorderachs-Aufhängungsbaugruppe (1) nach einem der vorhergehenden Ansprüche, **dadurch gekennzeichnet, daß** der einzige Schwenkpunkt (10) durch einen Torsionsstab gebildet ist, der elastisch jeden Tragarm (9) mit dem in der Mitte angeordneten Achsbauteil (19) verbindet.

7. Vorderachs-Aufhängungsbaugruppe (1) nach einem der vorhergehenden Ansprüche, **dadurch gekennzeichnet, daß** jedes lenkbare Rad (13) schwenkbar mit einem entsprechenden Tragarm (9) für eine Schwenkbewegung ausschließlich um eine im wesentlichen vertikale Achse (15) verbunden ist.

8. Vorderachs-Aufhängungsbaugruppe (1) nach Anspruch 2 und irgendeinem hiervon abhängigen Anspruch, **dadurch gekennzeichnet, daß** jeder zweite Verankerungspunkt (24) angenähert in der Mitte zwischen dem Schwenkpunkt (7) und dem lenkbaren Rad (13) angeordnet ist, der dem Arm (9) zugeordnet ist, der den Verankerungspunkt (24) enthält.

9. Vorderachs-Aufhängungsbaugruppe (1) nach einem der vorhergehenden Ansprüche, **dadurch gekennzeichnet, daß** jede stoßabsorbierende Vorrichtung (40) gegenüber der Umgebung durch die kombinierte Abdeckwirkung des in der Mitte angeordneten Achsbauteils (19) und eines Tragarmes (9) abgeschirmt ist.

## Revendications

1. Assemblage de suspension d'essieu avant (1) pour un véhicule comprenant :
- un organe central d'essieu (19) fixé au châssis du véhicule;
- des bras de soutien d'extension latérale (9), portant chacun une roue directrice associée (13); chaque bras de soutien (9) étant fixé avec pivotement à l'organe central d'essieu (19) via un pivot unique (10); et
- un dispositif d'amortissement (40) relié opérationnellement à chaque bras de soutien (9) et s'étendant substantiellement verticalement; et
**caractérisé en ce que**
- chaque bras de soutien (9) comprend un premier point d'ancrage (24);
- l'organe central d'essieu (19) comporte des seconds points d'ancrage (25) d'extension latérale ; ledit dispositif d'amortissement (40) étant disposé entre un premier et un second points d'ancrage (24, 25); et
- chaque bras de soutien (9) possède une section transversale en forme de U s'ouvrant vers le haut pour recevoir un second point d'ancrage associé (25).

2. Assemblage de suspension d'essieu avant (1) selon la revendication 1, **caractérisé en ce que** l'organe central d'essieu (19) est relié avec pivotement au châssis du véhicule via un pivot unique disposé horizontalement (7), s'étendant dans la direction longitudinale du véhicule.

3. Assemblage de suspension d'essieu avant (1) selon la revendication 1 ou 2, **caractérisé en ce que** le dispositif d'amortissement (40) comporte des moyens élastiques (10, 46) et des moyens d'accumulation (26, 45) coopérant mutuellement pour réguler le déplacement d'une roue directrice associée (13) par rapport au châssis du véhicule.

4. Assemblage de suspension d'essieu avant (1) selon la revendication 3, **caractérisé en ce que** lesdits moyens élastiques et lesdits moyens d'accumulation sont intégrés dans un seul organe amortissant (40).

5. Assemblage de suspension d'essieu avant (1) selon l'une quelconque des revendications précédentes, **caractérisé en ce que** les pivots uniques (10) raccordant les bras de soutien (9) à l'organe central d'essieu (19) sont mutuellement coaxiaux.

6. Assemblage de suspension d'essieu avant (1) selon l'une quelconque des revendications précédentes, **caractérisé en ce que** ledit pivot unique (10) est constitué par une barre de torsion raccordant élastiquement chaque dit bras de soutien (9) audit organe central d'essieu (19).

7. Assemblage de suspension d'essieu avant (1) selon l'une quelconque des revendications précédentes, **caractérisé en ce que** chaque roue directrice (13) est reliée avec pivotement à un bras de soutien (9) correspondant afin d'assurer seulement un mouvement de pivotement autour d'un axe substantiellement vertical (15).

8. Assemblage de suspension d'essieu avant (1) selon la revendication 2 et l'une quelconque des revendications en dépendant, **caractérisé en ce que** chaque second point d'ancrage (24) est situé approximativement à mi-distance entre ledit pivot (7) et la roue directrice (13) associée avec le bras (9) contenant ledit point d'ancrage (24).

9. Assemblage de suspension d'essieu avant (1) selon l'une quelconque des revendications précédentes, **caractérisé en ce que** chaque dispositif d'amortissement (40) est protégé de l'environnement par l'action combinée de recouvrement de l'organe central d'essieu (19) et d'un bras de soutien (9).
